# EUROPÄISCHE PATENTSCHRIFT

(11) **EP 1 162 489 B1**
(45) Veröffentlichungstag und Bekanntmachung des Hinweises auf die Patenterteilung: **04.05.2005**
(21) Anmeldenummer: 01102534.3
(22) Anmeldetag: 06.02.2001
(51) Int. Cl.: G02B 7/02, G02B 21/24, F16H 55/28, G02B 7/04, F16H 19/00

(54) **Fokussiertrieb für optische Instrumente**
Focusing drive mechanism for an optical instrument
Mécanisme de focalisation pour instrument d'optique

(30) Priorität: 15.05.2000 DE 10023568
(43) Veröffentlichungstag der Anmeldung: 12.12.2001
(73) Patentinhaber: Leica Microsystems (Schweiz) AG, 9435 Heerbrugg (CH)
(72) Erfinder: Soppelsa, Peter, 9436 Balgach (CH); Loh, Chris, Singapore 510 213 (SG)
(74) Vertreter: Reichert, Werner F., Dr.

(56) Entgegenhaltungen:
- DE-A- 2 047 532
- DE-U- 9 110 150
- US-A- 4 130 024
- US-A- 4 652 095
- PATENT ABSTRACTS OF JAPAN vol. 1996, no. 04, 30. April 1996 (1996-04-30) & JP 07 332470 A (OLYMPUS OPTICAL CO LTD), 22. Dezember 1995 (1995-12-22)

## Beschreibung

Die Erfindung betrifft einen Fokussiertrieb für optische Instrumente, insbesondere Mikroskope. Sie weist eine Ritzel- und Zahnstangenanordnung sowie Führungsmittel zum Verschieben eines Gerätebauteils gegenüber einem ortsfesten weiteren Bauteil auf. Bei derartigen Verstell-Mechanismen ergibt sich oftmals das Problem, dass beim Zusammenwirken von Ritzel und Zahnstange Alterungs- bzw. Verschleißerscheinungen auftreten, wobei es zu ruckartigen Verstellvorgängen kommen kann. Die Zahnstangen müssen sorgfältig zentriert und an dem zu verschiebenden Bauteil justiert werden. Dies führt zu zeit- und kostenintensiven Montage-Prozeduren. In Verbindung mit der bereits erwähnten Verschleißanfälligkeit derartiger Systeme kann daher bei vielfachem Gebrauch keine spiel- bzw. ruckfreie Führung über einen längeren Zeitraum erfolgen.

So ist beispielsweise aus der DE-A-20 47 532 eine elastisch gebettete Zahnstange aus Kunststoff bekannt, die in ihrem oberen Bereich Zähne aufweist. In ihrem unteren Bereich befindet sich ein im Querschnitt schwalbenschwanzförmig ausgebildeter federnder Ansatz. Dabei kann diese federnde Auflage auch aus zwei Teilen bestehen. Die Ansätze sind so konzipiert, dass ihr Kontaktierungsbereich mit dem Bauteil lediglich entlang einer Geraden verläuft. Es wird mithin lediglich eine eindimensionale Kontaktierung realisiert, wohingegen bei der vorliegenden Erfindung eine zweidimensionale Kontaktierung gegeben ist.

Weiterhin ist aus der JP-A-07 332 470 eine schmale Zahnstange mit Ritzel bekannt. An der Unterseite der Zahnstange, und zwar im Zentralbereich derselben, sind gewinkelte Ansätze angezeigt. Diese können jedoch aufgrund ihrer Positionierung unterhalb der Zahnstange nicht dieselbe symmetrische Abfederung realisieren wie bei dem vorliegenden Erfindungsgegenstand. Insbesondere ist die Gefahr einer Quer-Verwacklung gegeben.

Es ist daher die Aufgabe der vorliegenden Erfindung, die Nachteile bekannter Fokussiertrieb-Lösungen zu vermeiden und einen spiel- und ruckfreien Führungsmechanismus anzugeben, der darüber hinaus ohne Justierelemente in dem optischen Gerät eingebaut werden kann, woraus sich eine kostengünstige Herstellung ergibt.

Diese Aufgabe wird erfindungsgemäß durch einen Fokussiertrieb der eingangs genannten Art dadurch gelöst, dass er zur Realisierung einer spielfreien und verschleißarmen Führung eine mit einer Vielzahl von Abstützungselementen versehene Kunststoff-Zahnstange sowie parallel gehalterte und aus einem elektrisch leitfähigen Kunststoff-Material bestehende Gleitstäbe als Führungsmittel für die zu bewegende Baugruppe umfasst, wobei die Abstützungselemente armförmig an der Zahnstange seitlich angelenkt sind und mit ihren jeweiligen Endbereichen an dem zu verschiebenden Geräte-Modul flächig anliegen.

Mit Vorteil sind die Abstützungselemente im Längsquerschnitt stufen- bzw. "S"-förmig ausgebildet und in Draufsicht "L"-förmig an der Zahnstange paarweise angelenkt, wobei sie mit ihren jeweiligen Endbereichen an dem zu verschiebenden Gerräte-Modul derart positioniert sind, dass der Querabstand zwischen den beiden Kontaktierungs-Bereichen eines jeden Paares der Abstützungselemente größer ist als die Querdimensionierung des die Zähne aufweisenden Zahnstangenbereiches.

Der erfindungsgemäße Fokussiertrieb weist weiterhin als Führungsmittel für die Verschiebung eines Geräte-Moduls relativ zu einem feststehenden Geräte-Stativ parallele Gleitstäbe auf. Diese können in "V"-Nuten lose positioniert werden, wobei die Nuten einerseits in dem zu verschiebenden Geräte-Modul und andererseits in dem ortsfesten Geräte-Stativ vorgesehen sind.

In erfindungsgemäßer Weise werden die Gleitstäbe unter Druckspannung in ihrer jeweiligen Position gehalten. Dies wird dadurch realisiert, dass das die Gleitstäbe von außen umfassende Geräte-Stativ derart konstruktiv ausgestattet und dimensioniert ist, dass sich eine druckerzeugende Klammer-Wirkung auf die Gleitstäbe ergibt. Dadurch ist es möglich, Mittel zum dauerhaften Beibehalten bzw. zum gezielten Verändern des Druckes vorzusehen. Diese Mittel können einen unter Federvorspannung stehenden Drehknopf umfassen.

Durch die spezielle Materialauswahl gelingt es, einen Fokussiertrieb darzustellen, bei dem die Verschiebung entlang den Gleitstäben trocken gleitend erfolgt.

Als erfindungsgemäße Verwendung dieses Fokussiertriebs ist der Einsatz in antistatischen optischen Geräten, insbesondere Mikroskopen, vorgesehen.

Die Erfindung wird nun anhand der vorliegenden Zeichnungen näher beschrieben. Es zeigen in rein schematischer Darstellung:
- Figur 1:: in Seitenansicht den Vertikal-Teil eines ortsfesten Geräte-Stativs mit einem angesetzten, verschiebbaren Haltearm;
- Figur 2:: eine Aufsicht des in Figur 1 Dargestellten (Blickrichtung: Y) im Detail;
- Figur 3:: einen Horizontalschnitt (A - A) des vertikalen Stativ-Teils;
- Figur 4:: einen Horizontalschnitt (B - B) des in Figur 1 Dargestellten;
- Figur 5a:: eine Draufsicht der erfindungsgemäßen Zahnstange (Ausschnitt);
- Figur 5b:: einen Schnitt (A - A) des in Figur 5a Dargestellten;
- Figur 5c:: eine Seitenansicht des in Figur 5a Dargestellten mit zusätzlich eingezeichnetem Ritzel.

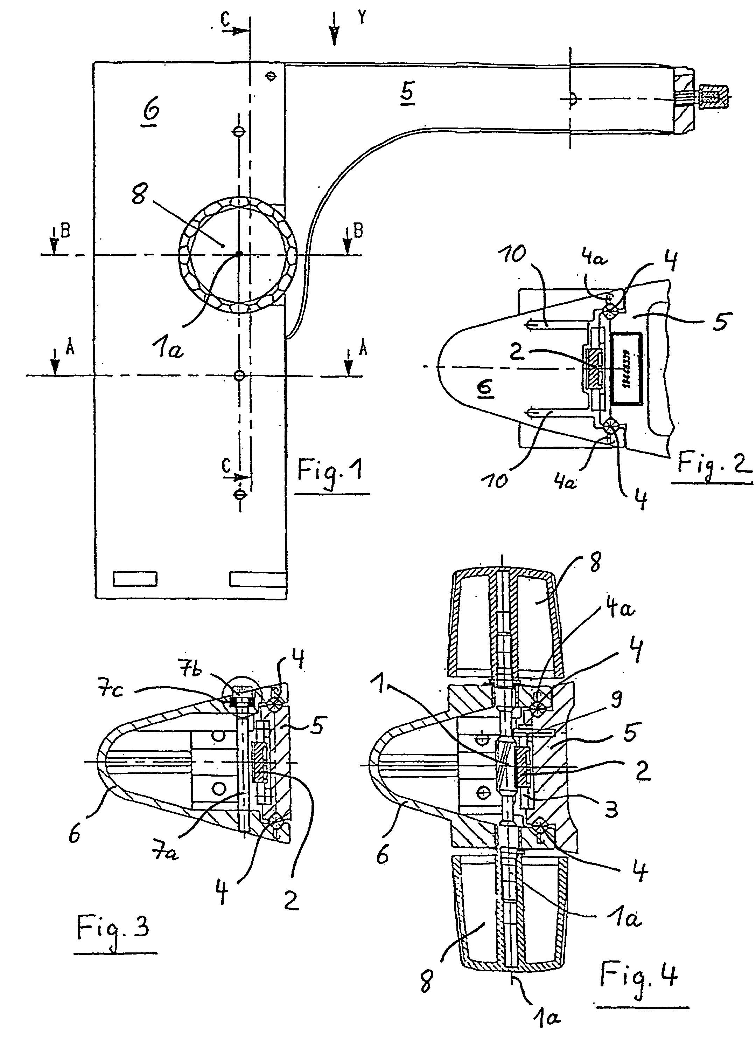

In Figur 1 ist in Seitenansicht ein Vertikal-Teil eines ortsfesten Stativs 6 dargestellt, welches einen Fokussierknopf 8 mit dessen Drehachse 1a zeigt. Ein abgewinkelter Haltearm 5, beispielsweise für einen Mikroskop-Objekttisch, ist entlang des vertikalen Stativs 6 verschiebbar gelagert.

Die Figur 4 stellt einen Horizontalschnitt längs der Ebene B - B von Fig. 1 dar. Man erkennt die beiden Fokussier-Knöpfe 8. Auf deren gemeinsamer Achse 1a befindet sich das Ritzel 1, welches mit der Zahnstange 2 kämmt. Zwischen dem ortsfesten Geräte-Stativ 6 einerseits und dem verschieblich gehalterten Geräte-Modul 5 (Haltearm) andererseits befinden sich zwei Gleitstäbe 4, die in entsprechend vorgesehenen "V"-Nuten lose gehaltert sind. Die Gleitstäbe sind im Querschnitt kreisförmig. Betätigt man einen Fokussierknopf 8 bzw. beide Fokussierknöpfe 8 in gleichsinniger Weise, so bewegt sich der mit der Zahnstange 2 verbundene Haltearm 5 senkrecht zur Zeichenebene, und zwar entweder nach oben oder nach unten.

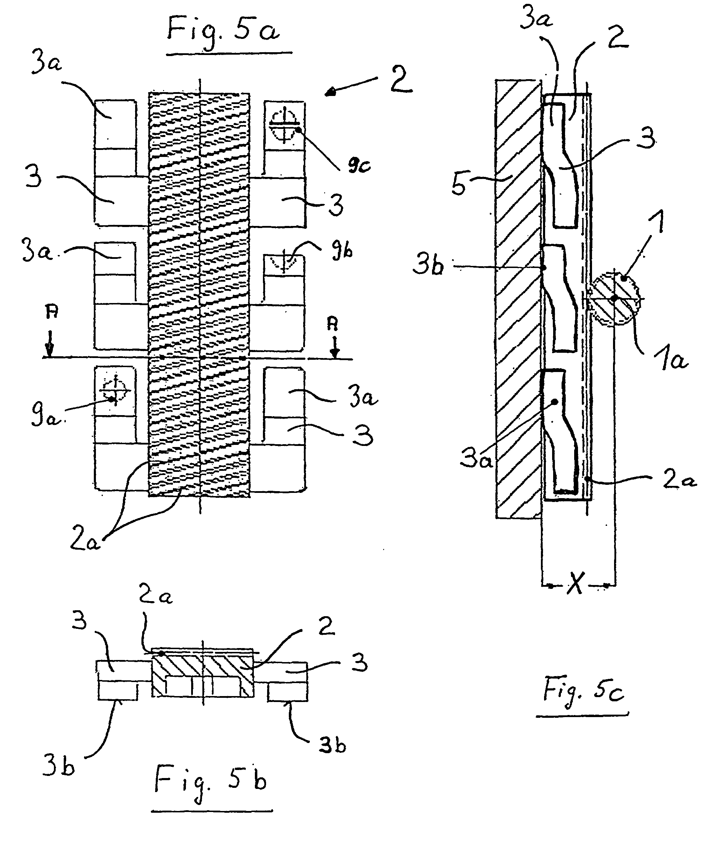

In den Figuren 5a bis 5c ist in unterschiedlichen Ansichten die erfindungsgemäße Zahnstange 2 ausschnittsweise dargestellt. In Figur 5a erkennt man eine Draufsicht auf einen Teil der Zahnstange 2. Man erkennt die mit einer Schrägzähnung 2a versehene eigentliche Zahnstange, die eine Vielzahl von Abstützungselementen 3 aufweist. Im dargestellten Fall sind die Abstützungselemente 3 paarweise - und zwar in Form abgewinkelter Arme - dargestellt. Ihre Endbereiche 3a bilden an den "abgewinkelten Armen" gewissermaßen die "Hände". Mit diesen Endbereichen 3a kontaktiert die Zahnstange 2 vielflächig den verschiebbaren Geräte-Modul 5. Dies ist in anschaulicher Weise in Figur 5c dargestellt. Man erkennt, dass nur die Endbereiche 3a der Abstützungselemente 3 auf bzw. an dem zu verschiebenden Geräte-Modul 5 auf- bzw. anliegen. Es ist deutlich ein gewisser Zwischenraum zwischen der eigentlichen Unterseite der Zahnstange und der Kontaktierungs-Fläche des verschiebbaren Geräte-Moduls 5 zu erkennen. Man erkennt aus Figur 5c ebenfalls, dass die Abstützungselemente 3 in der dargestellten Ansicht schwach "S"-förmig ausgebildet sind, so dass sich eine abfedernde Wirkung ergibt. Wenn sich das Ritzel 1 in Funktion befindet, übt es einen gewissen Druck auf den Bereich der Zähnung 2a der Zahnstange 2 aus, wobei die Zahnstange 2 diesem Druck örtlich "federnd" nachgibt. Man kann diesen Vorgang in anschaulicher Weise dadurch beschreiben, dass das Ritzel 1 gewissermaßen über die Zahnstange 2 "walkt" und diese nur im unmittelbaren jeweiligen Eingriffsbereich des Ritzels 1 elastisch nachgibt. Durch diesen "Abroll"-Vorgang ist in erfindungsgemäßer Weise eine spiel- und ruckfreie Betätigung des Fokussiertriebs dauerhaft gewährleistet. Dabei handelt es sich gewissermaßen um einen Selbst-Justier-Mechanismus. Dies bedeutet, dass die Zahnstange 2 als solche gar nicht in höchster Präzision dimensioniert und positioniert sein muss. Der aus Figur 5c ersichtliche Abstand X zwischen der Kontaktierungsfläche des Geräte-Moduls 5 und der Achse 1a des Ritzels 1 ist so bemessen, dass die erfindungsgemäße Funktion des Fokussiertriebs gewährleistet ist.

Die Zahnstange 2 kann - wie in Figur 5a angedeutet - an der Wand des Geräte-Moduls 5 mittels Schrauben 9 angebracht werden, wobei einige der Endbereiche 3a zur Schrauben-Durchführung entweder mit einem Loch 9a bzw. einem Halbloch 9b bzw. einem Langloch 9c versehen sein können. Die Langlöcher 9c kompensieren eventuell auftretende Detailveränderungen der Dimensionierung der Zahnstange 2 bzw. 2a sowie der Abstützungselemente 3 bzw. 3a beispielsweise infolge von Temperatur- und anderen Umwelteinflüssen. Vorteilhafter Weise wird die komplette Zahnstange 2, 2a, 3, 3a aus einem Kunststoff-Komposit-Material hergestellt, bestehend aus "DELRIN 577" mit 20 % Glasfaser-Anteil.

Aus den Figuren 2 bis 4 erkennt man übereinstimmend, dass die Gleitstäbe 4 in "V"-förmigen Nuten gehaltert sind, wobei die Nuten einerseits in dem ortsfesten Geräte-Stativ 6 und andererseits in dem verschiebbaren Geräte-Modul 5 angeordnet sind. Zweckmäßig ist es, dass jeder Gleitstab 4 eine Verdreh-Sicherung aufweist. Aus Figur 2 ist ersichtlich, dass dies in Form eines querstehenden Stiftes 4a realisiert werden kann. Aus Figur 2 ist weiterhin zu erkennen, dass das Geräte-Stativ 6 im Querschnitt derart konstruktiv ausgestaltet ist, dass es ein klammerförmiges Andrücken der beiden Gleitstäbe 4 bewirkt. Hierzu weist das Geräte-Stativ 6 im Querschnitt (vergleiche Figur 2) tiefe Einschnitte 10 auf, die dem gesamten Geräte-Modul in diesem Bereich eine dauerhafte Klammer-Wirkung verleihen. Durch eine Verstellschraube 7a, die einen Drehknopf 7b aufweist, welcher im Bereich 7c eine unter Druckspannung stehende Feder (nicht mit dargestellt) aufweist, kann die bereits beschriebene Klammer-Wirkung noch erhöht bzw. gezielt voreingestellt werden. Dazu kann beim gleichzeitigen, aber gegensinnigen, kräftigen Verdrehen beider Fokussierknöpfe 8 eine erhöhte Druckspannung an dem Geräte-Stativ 6 erzeugt werden, so dass auf diese Weise die "Schwergängigkeit" des Fokussiertriebs verändert werden kann.

Die Gleitstäbe sind aus elektrisch leitendem Kunststoff-Material, beispielsweise aus einem mit Kohlenstofffasern verstärkten Komposit-Material, gefertigt. Dadurch ist eine elektrisch leitende Verbindung zwischen den beiden zu verschiebenden Bauteilen (Geräte-Modul 5 / Geräte-Stativ 6) gegeben, wodurch sich in vorteilhafter Weise eine Verwendung dieser beschriebenen Anordnung in antistatischen Mikroskopen ergibt.

Mit dem erfindungsgemäßen Fokussiertrieb wird ein kostengünstiger Verstell-Mechanismus zwischen optischen Geräte-Modulen angegeben, wobei eine dauerhaft spiel- und ruckfreie Verstellfunktion realisiert wird. Dabei ist die gesamte Anordnung aufgrund der Konstruktion und der speziellen Materialauswahl weitestgehend verschleißfrei.

## Patentansprüche

1. Fokussiertrieb für optische Instrumente, insbesondere Mikroskope, enthaltend eine Ritzelanordnung (1) und eine mit Abstützungselementen versehene Zahnstangenanordnung (1, 2) sowie Führungsmittel zum kontinuierlichen Verändern der Relativlage mindestens zweier Baugruppen zueinander, **dadurch gekennzeichnet, dass** der Fokussiertrieb zur Realisierung einer spielfreien und verschteißarmen Führung eine mit einer Vielzahl von Abstützungselementen (3) versehene Kunststoff-Zahnstange (2) sowie parallel gehalterte und aus einem elektrisch leitfähigen Kunststoff-Material bestehende Gleitstäbe (4) als Führungsmittel für die zu bewegende Baugruppe umfasst, wobei die Abstützungselemente (3) armförmig an der Zahnstange (2) seitlich angelenkt sind und mit ihren jeweiligen Endbereichen (3a) an dem zu verschiebenden Geräte-Modul (5) flächig anliegen.

2. Fokussiertrieb nach Anspruch 1, **dadurch gekennzeichnet, dass** die Abstützungselemente (3) im Längsquerschnitt stufen- bzw. "S"-förmig ausgebildet und in Draufsicht "L"-förmig an der Zahnstange (2) paarweise angelenkt sind, wobei sie mit ihren jeweiligen Endbereichen (3a) an dem zu verschiebenden Geräte-Modul (5) derart positioniert sind, dass der Querabstand zwischen den beiden Kontaktierungs-Bereichen (3b) eines jeden Paares der Abstützungselemente (3) größer ist als die Querdimensionierung des die Zähnung (2a) aufweisenden Zahnstangenbereiches.

3. Fokussiertrieb nach Anspruch 1, **dadurch gekennzeichnet, dass** als Führungsmittel für die Verschiebung eines Geräte-Moduls (5) - beispielsweise eines mit der Zahnstange (2) verbundenen Haltearms (5) für einen Mikroskop-Objekttisch - relativ zu einem feststehenden Geräte-Stativ (6) parallele Gleitstäbe (4) vorgesehen sind, wobei diese in "V"-Nuten lose positioniert sind, die einerseits in dem zu verschiebenden Geräte-Modul (5) und andererseits in dem ortsfesten Geräte-Stativ (6) angeordnet sind.

4. Fokussiertrieb nach Anspruch 3, **dadurch gekennzeichnet, dass** das die Gleitstäbe (4) von außen umfassende Geräte-Stativ (6) derart konstruktiv ausgestattet und dimensioniert ist, dass sich eine Druck erzeugende Klammer-Wirkung auf die Gleitstäbe (4) ergibt.

5. Fokussiertrieb nach Anspruch 4, **dadurch gekennzeichnet, dass** Mittel zum dauerhaften Beibehalten bzw. zum gezielten Verändern des Druckes vorgesehen sind und dass diese Mittel einen unter Federvorspannung stehenden Drehknopf (7) umfassen.

6. Verwendung eines Fokussiertriebs nach mindestens einem der vorhergehenden Ansprüche in einem antistatischen Mikroskop.

## Claims

1. Focusing drive for optical instruments, in particular microscopes, including a pinion arrangement (1) and a toothed rack arrangement (1, 2) provided with support elements, and also guide means for continuously varying the position of at least two subassemblies relative to one another, **characterized in that** in order to implement guidance free from backlash and low in wear the focusing drive comprises a plastic toothed rack (2), provided with a multiplicity of support elements (3), as well as sliding rods (4), held in parallel and consisting of an electrically conductive plastic material, as guide means for the subassembly to be moved, the support elements (3) being laterally articulated in the shape of an arm to the toothed rack (2) and bearing flat with their respective end regions (3a) against the device module (5) to be displaced.

2. Focusing drive according to Claim 1, **characterized in that** the support elements (3) are constructed with a stepped or "S"-shaped longitudinal cross section and are articulated in pairs to the toothed rack (2) in an "L"-shaped fashion in plan view, in which case they are positioned with their respective end regions (3a) on the device module (5) to be displaced in such a way that the transverse spacing between the two contacting regions (3b) of each pair of the support elements (3) is greater than the transverse dimension of the toothed rack region having the toothing (2a).

3. Focusing drive according to Claim 1, **characterized in that** provided as guide means for displacing a device module (5) - for example a retaining arm (5), connected to the toothed rack (2), for a microscope specimen stage - relative to a fixed device stand (6) are parallel sliding rods (4) which are positioned loosely in "V" grooves which are arranged in the device module (5) to be displaced, on the one hand, and in the stationary device stand (6), on the other hand.

4. Focusing drive according to Claim 3, **characterized in that** the device stand (6) surrounding the sliding rods (4) from outside is designed to be equipped and dimensioned so as to produce a pressure-generating clamp action on the sliding rods (4).

5. Focusing drive according to Claim 4, **characterized in that** means are provided for permanently maintaining and/or specifically varying the pressure, and **in that** these means comprise a rotary knob (7) subjected to spring biasing.

6. Use of a focusing drive according to at least one of the preceding claims in an antistatic microscope.

## Revendications

1. Mécanisme de focalisation pour instruments optiques, en particulier pour des microscopes, contenant un agencement de pignon (1) et un agencement de crémaillère (1, 2) pourvu d'éléments de support, ainsi que des moyens de guidage en vue de modifier de manière continue la position relative d'au moins deux modules l'un par rapport à l'autre, **caractérisé en ce que** le mécanisme de focalisation pour la réalisation d'un guidage sans jeu et sans usure, comprend une crémaillère en plastique (2) pourvue d'une pluralité d'éléments de support (3) ainsi que des barres coulissantes (4) maintenues en parallèle et constituées d'un matériau en plastique conducteur de l'électricité servant de moyens de guidage pour le module à déplacer, les éléments de support (3) étant articulés en forme de bras latéralement sur la crémaillère (2) et s'appliquant à plat avec leurs parties d'extrémité respectives (3a) sur le module d'appareil à déplacer (5).

2. Mécanisme de focalisation selon la revendication 1, **caractérisé en ce que** les éléments de support (3) sont réalisés en section transversale longitudinale en forme de gradins ou de "S", et sont articulés par paire en forme de "L" sur la crémaillère (2), vu de dessus, et ils sont positionnés avec leurs parties d'extrémité respectives (3a) sur le module d'appareil à déplacer (5) de telle sorte que la distance transversale entre les deux parties de contact (3b) de chaque paire des éléments de support (3) soit supérieure à la dimension transversale de la partie de la crémaillère présentant la denture (2a).

3. Mécanisme de focalisation selon la revendication 1, **caractérisé en ce que** l'on prévoit comme moyens de guidage pour le déplacement d'un module d'appareil (5) - par exemple d'un bras de maintien (5) connecté à la crémaillère (2) pour une platine porte-objet d'un microscope - par rapport à un support d'appareil fixe (6), des barres coulissantes parallèles (4), celles-ci étant positionnées lâchement dans des rainures en "V" qui sont disposées d'une part dans le module d'appareil à déplacer (5) et d'autre part dans le support d'appareil fixe (6).

4. Mécanisme de focalisation selon la revendication 3, **caractérisé en ce que** le support d'appareil (6) entourant de l'extérieur les barres coulissantes (4) est muni et dimensionné constructivement de telle sorte qu'il se produise un effet de serrage produisant une pression sur les barres coulissantes (4).

5. Mécanisme de focalisation selon la revendication 4, **caractérisé en ce que** l'on prévoit des moyens pour maintenir de manière durable ou pour modifier de façon ciblée la pression, et **en ce que** ces moyens comprennent un bouton tournant (7) soumis à la précontrainte d'un ressort.

6. Utilisation d'un mécanisme de focalisation selon au moins l'une quelconque des revendications précédentes dans un microscope antistatique.
